# FASCICULE DE BREVET EUROPEEN

(11) **EP 0 808 466 B1**
(45) Date de publication et mention de la délivrance du brevet: **24.10.2001**
(21) Numéro de dépôt: 96901873.8
(22) Date de dépôt: 30.01.1996
(51) Int. Cl.: G01V 1/20

(54) **PROCEDE DE FABRICATION D'UNE ANTENNE LINEAIRE ACOUSTIQUE**
VERFAHREN ZUR HERSTELLUNG VON EINER AKUSTISCHEN LINIENANORDNUNG
METHOD FOR MAKING A LINEAR ACOUSTIC ANTENNA

(30) Priorité: 10.02.1995 FR 9501570
(43) Date de publication de la demande: 26.11.1997
(73) Titulaire: THOMSON MARCONI SONAR PTY LTD, Rydalmere, New South Wales 2116 (AU)
(72) Inventeur: CARPENTER, Allan, Llyod, F-92402 Courbevoie Cédex (FR); BERTHEAS, Jean, F-92402 Courbevoie Cédex (FR); MORESCO, Gilles, F-92402 Courbevoie Cédex (FR); RIVOIRA, Robert, F-92402 Courbevoie Cédex (FR)
(74) Mandataire: Desperrier, Jean-Louis
(86) Numéro de dépôt international: FR9600149
(87) Numéro de publication internationale: WO9624861

(56) Documents cités:
- EP-A- 0 237 616
- EP-A- 0 508 904
- EP-A- 0 560 674
- WO-A-87/03379
- US-A- 4 809 243

## Description

La présente invention se rapporte aux procédés qui permettent de fabriquer une antenne acoustique linéaire du type destinée à être remorquée derrière un bateau pour procéder à des explorations acoustiques, par exemple de la recherche pétrolière.

De telles antennes sont formées de tronçons, de préférence identiques, raccordés les uns aux autres par des connecteurs. Ces tronçons sont généralement formés d'une gaine contenant les hydrophones de réception et divers organes électroniques. Des câbles électriques courent d'un bout à l'autre du tronçon pour permettre d'alimenter ces organes électroniques et de ramener à bord du bateau les signaux reçus par les hydrophones. Pour obtenir en outre une résistance à la traction suffisante, on utilise des câbles de reprise d'effort qui relient les connecteurs des deux extrémités et qui permettent de ne pas appliquer les efforts de traction sur la gaine, ni sur les câbles de connexion électrique.

Pour protéger les organes contenus dans la gaine, ainsi que pour maintenir la continuité acoustique entre le milieu extérieur duquel arrivent les ondes sonores à détecter et les hydrophones chargés justement de détecter ces ondes sonores, ainsi que pour d'autres raisons plus secondaires mais néanmoins très utiles, on est amené à remplir le volume libre intérieur de la gaine par un produit adéquat .

Pour cela il est en particulier connu de remplir chaque tronçon avec une huile diélectrique de densité inférieure à celle de l'eau et maintenue en légère surpression par rapport à la pression du milieu extérieur. Dans ce cas les câbles de reprise d'effort sont généralement incorporés dans la gaine. La mise en oeuvre de ce premier procédé nécessite une opération de remplissage qui est particulièrement lourde à effectuer. En outre les risques de fuites ne sont nullement négligeables.

Il est aussi connu, en particulier du brevet US n° 4 491 939 déposé selon la procédure PCT le 10 août 1982 sous une priorité australienne du 13 août 1981, avec pour inventeur Allan L. CARPENTER et pour cessionnaire "The Commonwealth of Australia", et délivré le 1er janvier 1985, de fabriquer chaque tronçon en plaçant les câbles de reprise d'effort au centre de celui-ci et en remplissant la gaine avec un gel acoustique qui vient noyer et immobiliser les organes, tels que les hydrophones, qui se trouvent à l'intérieur de cette gaine. On obtient ainsi une antenne quasiment "solide". Une telle technique est proche de celle utilisée pour la fabrication des câbles. Les performances obtenues ne sont toutefois pas complètement satisfaisantes car elles ne permettent pas d'assurer une continuité complète au niveau acoustique entre le milieu extérieur à l'antenne et le milieu intérieur de celle-ci, ce qui perturbe les signaux acoustiques arrivant sur les hydrophones. En outre en raison de la position centrale des câbles de reprise d'effort, on constate un certain fluage de la gaine, ce qui vient à la fois augmenter cette perturbation des signaux acoustiques et rendre plus difficile les manipulations de l'antenne, en particulier son enroulement sur un touret de rangement.

Pour surmonter ces inconvénients, l'invention propose un procédé de fabrication d'une antenne acoustique linéaire, principalement caractérisé en ce qu'il comprend les étapes suivantes :
- fabrication d'un ensemble de cylindres de mousse à cellules ouvertes de longueur manipulable et collage sur la surface de ces cylindres d'au moins trois bandelettes longitudinales en tissu inextensible régulièrement réparties sur la périphérie du cylindre ;
- incision longitudinale du cylindre sur toute sa longueur, creusement dans la partie centrale ainsi ouverte d'alvéoles et mise en place dans ces alvéoles de modules électroacoustiques de réception ;
- fermeture du cylindre en laissant dépasser les fils de connexion des modules électroacoustiques par la fente longitudinale et collage de cette fente ;
- mise bout à bout des cylindres constituant un tronçon de l'antenne et bobinage sur l'ensemble d'une première couche de matériau non tissé poreux, avec recouvrement d'une spire sur l'autre ;
- mise en place d'une nappe de câbles de raccordement en une ou plusieurs couches croisées sur l'ensemble de cette structure ;
- bobinage sur cette nappe de câbles d'une deuxième couche en spirale, sans recouvrement ;
- raccordement des modules électroacoustique aux câbles de la nappe de raccordement ;
- bobinage sur la deuxième couche d'une troisième couche de matériau non tissé, avec recouvrement ;
- tressage sur cette troisième couche d'un ensemble de fils pour former un filet, et maintien de ce filet sur la troisième couche par des points de colle ;
- enfilage sur ce filet d'anneaux de renforcement radial très résistants et maintien de ces anneaux en place par collage sur le filet ;
- bobinage sur cet ensemble d'une quatrième couche de matériau non tissé poreux, avec recouvrement ;
- tressage d'un filet formé de brins à larges mailles ;
- extrusion sur cette quatrième couche d'une gaine de protection armée avec des fils longitudinaux ;
- réalisation et raccordement des extrémités du tronçon ; et
- imprégnation de la mousse formant l'intérieur du tronçon avec une huile diélectrique en légère surpression.

Selon une autre caractéristique, la deuxième couche en spirale est réalisée en matériau non tissé.

Selon une autre caractéristique, la deuxième couche en spirale est réalisée avec un film en polyester.

Selon une autre caractéristique, le cylindre de mousse est réalisé à partir d'un tube de mousse dans lequel on insère des cylindres de mousse adaptés au diamètre intérieur de ce tube.

Selon une autre caractéristique, on utilise à la place des anneaux de renfort radial une bande hélicoïdale continue bobinée ou extrudée sur les cylindres de mousse.

D'autres particularités et avantages de l'invention apparaîtront clairement dans la description suivante faite à titre d'exemple non limitatif en regard des figures annexées qui représentent :
- la figure 1, une vue en perspective d'un cylindre de mousse formant le coeur d'un tronçon d'antenne ;
- la figure 2, une vue en coupe transversale de ce cylindre après avoir été fendu ;
- la figure 3, une vue en coupe longitudinale du cylindre comportant un hydrophone de réception ;
- les figures 4 et 5, des vues de côté du cylindre à différents stades de bobinage des couches extérieures de l'antenne, et
- la figure 6, des vues en coupe et en perspective d'une variante de fabrication du cylindre.

La structure de l'antenne fabriquée selon le procédé selon l'invention est dérivée de celle décrite, tout au moins partiellement, dans le brevet européen EP-A-0 508 904. Pour éviter la tension au câble de signalisation, voir le brevet européen EP-A-0 560 674.

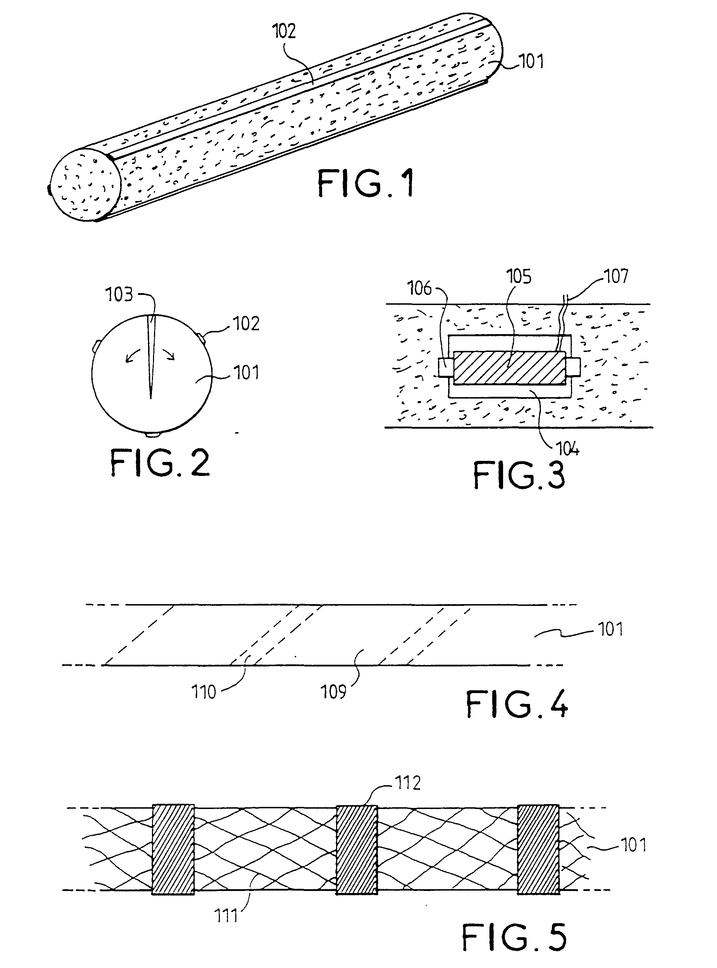

Dans une première étape, représentée sur la figure 1, on confectionne de manière connue, par exemple par moulage ou par découpage dans un bloc, des cylindres de mousse à cellules ouvertes d'une longueur telle, par exemple un mètre, que ces cylindres soient facilement manipulables. Sur ces cylindres on colle au moins trois bandelettes longitudinales en tissu inextensible 102, réparties de manière régulière sur la circonférence.

Dans une deuxième étape, représentée sur la figure 2, on fend ces cylindres sur toute leur longueur selon une fente longitudinale 103 qui s'arrête dans l'épaisseur du cylindre à proximité de la surface de celui-ci diamétralement opposée à l'ouverture de cette fente 103. Ceci permet d'ouvrir le cylindre en deux.

Dans une troisième étape, représentée sur la figure 3, on creuse à l'intérieur du cylindre des cavités axiales 104, en utilisant pour cela l'ouverture obtenue en rabattant de chaque côté selon les flèches représentées sur la figure 2 les deux demi-parties du cylindre déterminées par la fente 103. Ceci permet de placer à l'intérieur des alvéoles les modules électroacoustiques 105 destinés à la réception des ondes acoustiques. Ces modules acoustiques comprennent par exemple un hydrophone et un préamplificateur. Ils comportent des ergots d'extrémité 106 qui permettent de les immobiliser dans la cavité 104 selon l'axe du cylindre de mousse. Ils comprennent également des fils de connexion 107, que l'on vient faire passer par la fente 103.

Dans une quatrième étape, on referme le cylindre de mousse en emprisonnant les modules électroacoustiques 105 dans les alvéoles 104 et en laissant sortir à l'extérieur du cylindre les fils de connexions 107. Le cylindre étant ainsi refermé, on le colle avec des points de colle qui le maintiennent dans cette position.

Dans une cinquième étape, représentée sur la figure 4, on met bout à bout l'ensemble des cylindres destinés à former un seul tronçon de l'antenne, et on bobine sur cet ensemble une première couche d'un matériau non tissé 109 formant une bande dont les spires successives viennent se recouvrir assez largement au niveau représenté par les traits obliques pointillés 110. Ceci permet de lisser la surface de l'ensemble en prévision du câblage. Ce matériau non tissé est poreux pour permettre l'imprégnation ultérieure de la mousse. On extrait alors manuellement les fils de connexion afin que ceux-ci ne soient pas masqués par la couche de matériau non tissé.

Dans une sixième étape, (,on met en place autour de la structure ainsi obtenue la nappe des fils servant à raccorder les modules 105 en enroulant cette nappe sous la forme d'une ou de plusieurs couches croisées.

Dans une septième étape, on bobine en spirale, mais cette fois-ci sans recouvrement, une deuxième couche de matériau non tissé poreux pour maintenir la nappe des fils que l'on a mis en place lors de la sixième étape. A titre de variante, on pourrait utiliser un film, de préférence en polyester, à la place du matériau non tissé. Dans les deux cas, on localise visuellement les fils de connexion à travers la couche ainsi mise en place.

Dans une huitième étape, on procède au câblage des modules électroacoustiques. Pour cela on commence par repérer les sorties des modules qui restent visibles sous la nappe de câbles. Suivant une variante, et pour prévoir le cas où certains fils resteraient cachés, on peut équiper ceux-ci au préalable lors de la quatrième étape d'un petit aimant permanent. On peut utiliser pour détecter cet aimant un petit appareil électronique banal sensible au champ et déclenchant au-delà d'un certain seuil un signal sonore ou lumineux.

Les fils de connexions étant extraits, on les relie aux câbles de la nappe mis en place lors de la sixième étape, en utilisant pour se repérer les codes de couleur portés par les différents fils. A titre de variante, on pourrait utiliser des codes barre.

Le câblage étant ainsi effectué, dans une neuvième étape on bobine une troisième couche de matériau non tissé poreux, avec cette fois-ci recouvrement des spires les unes sur les autres.

Dans une dixième étape, représentée sur la figure 5, on tresse sur l'ensemble ainsi obtenu, à la surface de la troisième couche de non tissé, un filet 111 à larges mailles obtenu à l'aide de fils de préférence en polyester. Ce tressage s'effectue par exemple avec une machine de câblage conventionnelle pour la fabrication des câbles électriques. Pour éviter tout déplacement du filet par rapport à la couche de non tissé inférieure on peut maintenir les fils de polyester sur cette couche à l'aide de points de colle répartis plus ou moins uniformément sur la couche de non tissé inférieure.

Dans une onzième étape, on enfile sur l'ensemble, au-dessus du filet, des anneaux de renforcement 112 fabriqués en un matériau très résistant, par exemple du type époxy fibre de carbone. Ces anneaux sont de préférence placés au droit des modules électroacoustiques 105 et ils sont maintenus en place par collage sur le filet 111.

Dans une douzième étape, on bobine une quatrième couche de matériau non tissé poreux, cette fois-ci encore avec recouvrement, afin de pouvoir faciliter le passage ultérieur dans la tête d'extrusion de la gaine. Cette quatrième couche permet également d'éviter que la gaine qui va être extrudée sur l'ensemble ainsi obtenu ne vienne adhérer aux anneaux de renforcement radial 112.

Dans une treizième étape, on met en place par dessus cette quatrième couche un autre filet formé de brins à larges mailles, de préférence en polyester .

Dans une quatorzième étape, on extrude la gaine destinée à protéger l'ensemble sur la surface de la quatrième couche de non tissé, en la garnissant en même temps, selon une technique connue, avec des fibres résistantes, réalisées par exemple avec un matériau tel que le KEVLAR (marque déposée). Cette extrusion se fait de manière classique à l'aide d'une extrudeuse munie d'une tête en équerre dans laquelle on peut faire pénétrer par une extrémité le matériel composite provenant de la quatorzième étape et le faire ressortir par l'autre revêtu de la couche de protection provenant du corps de l'extrudeuse. Les fils de renforcement sont eux-mêmes introduits dans des trous percés en couronne autour de la première extrémité de la tête par où rentre le composite à recouvrir.

Dans une quinzième étape, on réalise les extrémités du tronçon d'antenne ainsi obtenu, d'une manière tout à fait classique en commençant par mettre à longueur l'ensemble et en dégageant les fils de renforcement longitudinaux. On place ensuite à chacune de ces extrémités un anneau de reprise d'effort qui forme la périphérie de chaque jonction d'extrémité et l'on vient ancrer sur celui-ci les fils de renforcement longitudinaux correctement répartis et tendus. On dégage ensuite les fils électriques de la nappe de câblage et on vient les connecter aux pièces de connexion des connecteurs d'extrémités. On termine ensuite en plaçant les pièces mécaniques de ces connecteurs et en venant les fixer sur les anneaux de reprise d'effort pour réaliser ainsi les jonctions d'extrémité.

Dans une seizième et dernière étape, on procède à l'imprégnation des cylindres de mousse 101 formant le coeur du tronçon ainsi obtenu, avec une huile diélectrique appropriée. Ce remplissage se fait par exemple par une valve située sur l'un des connecteurs selon une technique brevetée par la demanderesse. Après avoir attendu le temps suffisant pour que la mousse soit bien imprégnée, on met l'ensemble en légère surpression, on procède au dégazage, puis on termine en laissant se refermer la valve.

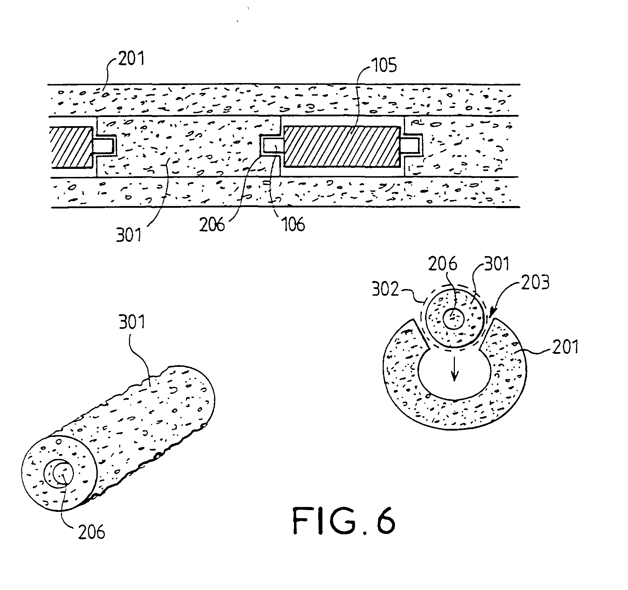

A titre de variante, l'invention propose, comme représenté sur la figure 6, d'utiliser non pas des cylindres en mousse, mais des tubes en mousse 201 comportant à l'intérieur des cylindres plus petits 301 dont le diamètre extérieur vient coïncider avec le diamètre intérieur des tubes. Ces cylindres intérieurs 301 sont munis sur leur face d'extrémité de cavités 206 adaptées aux ergots 106 des modules électroacoustiques 105. Ils sont en outre recouverts d'un film 302, de préférence en polyester. Ainsi pour fabriquer le composite résultat de la quatrième étape de la description principale, on fend les tubes 201 selon des incisions longitudinales 203 et on introduit dans ces tubes les cylindres 206 et les modules 105. On referme ensuite les tubes 201 et on scelle les incisions 203 avec des points de colle. On se retrouve alors dans la même situation qu'à la fin de l'étape 4 principale.

A titre de variante, on peut également repérer les sorties électriques des modules à l'aide de rayons X.

A titre de variante, on peut également remplacer les anneaux de renfort radial 112 par une bande continue hélicoïdale enroulée sur la longueur du tronçon. Cette bande pourra éventuellement être obtenue par extrusion avec une tête tournante qui viendra découper la couche ainsi extrudée.

## Revendications

1. Procédé de fabrication d'une antenne acoustique linéaire, **caractérisé en ce qu'**il comprend les étapes suivantes :
- fabrication d'un ensemble de cylindres (101) de mousse à cellules ouvertes de longueur manipulable et collage sur la surface de ces cylindres d'au moins trois bandelettes (102) longitudinales en tissu inextensible régulièrement réparties sur la périphérie du cylindre ;
- incision longitudinale (103) du cylindre sur toute sa longueur, creusement dans la partie centrale ainsi ouverte d'alvéoles (104) et mise en place dans ces alvéoles de modules électroacoustiques de réception (105) ;
- fermeture du cylindre en laissant dépasser les fils de connexion (107) des modules électroacoustiques par la fente longitudinale (103) et collage de cette fente ;
- mise bout à bout des cylindres constituant un tronçon de l'antenne et bobinage sur l'ensemble d'une première couche de matériau non tissé poreux (109), avec recouvrement d'une spire sur l'autre ;
- mise en place d'une nappe de câbles de raccordement en une ou plusieurs couches croisées sur l'ensemble de cette structure ;
- bobinage sur cette nappe de câbles d'une deuxième couche en spirale, sans recouvrement ;
- raccordement des modules électroacoustique (105) aux câbles de la nappe de raccordement ;
- bobinage sur la deuxième couche d'une troisième couche de matériau non tissé, avec recouvrement ;
- tressage sur cette troisième couche d'un ensemble de fils pour former un filet (111), et maintien de ce filet sur la troisième couche par des points de colle ;
- enfilage sur ce filet d'anneaux (112) de renforcement radial très résistants et maintien de ces anneaux en place par collage sur le filet ;
- bobinage sur cet ensemble d'une quatrième couche de matériau non tissé poreux, avec recouvrement ;
- tressage d'un filet formé de brins à larges mailles ;
- extrusion sur cette quatrième couche d'une gaine de protection armée avec des fils longitudinaux ;
- réalisation et raccordement des extrémités du tronçon ; et
- imprégnation de la mousse formant l'intérieur du tronçon avec une huile diélectrique en légère surpression.

2. Procédé selon la revendication 1, **caractérisé en ce que** la deuxième couche en spirale est réalisée en matériau non tissé poreux.

3. Procédé selon la revendication 1, **caractérisé en ce que** la deuxième couche en spirale est réalisée avec un film en polyester.

4. Procédé selon l'une quelconque des revendications 1 à 3, **caractérisé en ce que** le cylindre de mousse (101) est réalisé à partir d'un tube de mousse (201) dans lequel on insère des cylindres de mousse (206) adaptés au diamètre intérieur de ce tube.

5. Procédé selon l'une quelconque des revendications 1 à 4, **caractérisé en ce que** l'on utilise à la place des anneaux de renfort radial (112) une bande hélicoïdale continue bobinée ou extrudée sur les cylindres de mousse (101).

## Patentansprüche

1. Verfahren zur Herstellung einer akustischen Linearantenne, **dadurch gekennzeichnet, daß** es die folgenden Verfahrensschritte enthält:
- Herstellung von Zylindern (101) aus offenporigem Schaumstoff einer handlichen Länge und Aufkleben von mindestens drei Bändchen (102) aus nicht dehnbarem Gewebe in Längsrichtung auf die Oberfläche dieser Zylinder in gleichmäßiger Verteilung über den Umfang dieser Zylinder,
- Aufschlitzen des Zylinders (103) in Längsrichtung über die ganze Länge, Aushöhlen von Hohlräumen (104) in dem so zugänglich gemachten zentralen Teil und Einsetzen von elektro-akustischen Empfangsmoduln (105) in diese Hohlräume,
- Verschließen des Zylinders, wobei die Anschlußdrähte (107) der elektro-akustischen Moduln aus dem Längsschlitz (103) hervorragen, und Verkleben des Schlitzes,
- Aneinanderreihen der einen Antennenabschnitt bildenden Zylinder und Umwickeln dieser Einheit mit einer ersten Schicht eines nicht gewebten, porösen Materials (109) mit gegenseitiger Überlappung der Windungen,
- Anbringen einer Schicht von Anschlußkabeln in einer oder mehreren gekreuzten Lagen auf der Einheit,
- Umwickeln dieser Schicht von Anschlußkabeln mit einer zweiten spiralförmig ohne Überlappung gewickelten Schicht,
- Anschluß der elektro-akustischen Moduln (105) an die Kabel der Kabelanschlußschicht,
- Umwickeln der zweiten Schicht mit einer dritten Schicht aus nicht gewebtem Material mit Überlappung,
- Aufbringen von Drähten zur Bildung eines Netzes (111) auf diese dritte Schicht und Fixierung dieses Netzes auf der dritten Schicht durch Klebepunkte,
- Aufstecken von sehr widerstandsfähigen Ringen zur radialen Verstärkung (112) auf dieses Netz und Befestigung dieser Ringe auf dem Netz durch Festkleben,
- Umwickeln dieser Einheit mit einer vierten Schicht aus nicht gewebtem, porösem Material mit Überlappung,
- Aufbringen eines grobmaschingen Netzes,
- Aufbringen einer mit Längsdrähten verstärkten Schutzhülle durch Extrusion auf diese vierte Schicht,
- Herstellung und Anschluß der Enden des Abschnitts,
- und Imprägnierung des das Innere des Abschnitts bildenden Schaumstoffs mit einem dielektrischen Öl bei leichtem Überdruck.

2. Verfahren nach Anspruch 1, **dadurch gekennzeichnet, daß** die zweite spiralförmige Schicht aus einem nicht gewebten porösen Material ist.

3. Verfahren nach Anspruch 1, **dadurch gekennzeichnet, daß** die zweite spiralförmig gewickelte Schicht aus einer Polyesterfolie besteht.

4. Verfahren nach einem beliebigen der Ansprüche 1 bis 3, **dadurch gekennzeichnet, daß** der Schaumstoff-Zylinder (101) aus einem Schaumstoff-Rohr (201) und aus in dieses hineingesteckten Zylindern (206) aus Schaumstoff mit an den Innendurchmesser des Rohrs angepaßtem Durchmesser besteht.

5. Verfahren nach einem beliebigen der Ansprüche 1 bis 4, **dadurch gekennzeichnet, daß** man anstelle der Ringe (112) zur radialen Verstärkung ein kontinuierliches Spiralband auf die Schaumstoff-Zylinder (101) aufwickelt oder extrudiert.

## Claims

1. Process for manufacturing a linear acoustic antenna, **characterized in that** it comprises the following steps:
- manufacturing a number of open-cell foam cylinders (101) of handleable length, and adhesively bonding at least three longitudinal strips (102) of inextensible fabric onto the surface of these cylinders so as to be distributed uniformly around the periphery of each cylinder;
- making a longitudinal incision (103) in the cylinder along its entire length, hollowing out cavities (104) in the central part thus opened, and fitting electroacoustic receiver modules (105) in these cavities;
- closing the cylinder, but leaving the connection leads (107) for the electroacoustic modules to protrude through the longitudinal slit (103), and adhesively bonding this slit;
- arranging the cylinders constituting one section of the antenna end to end, and winding a first layer of porous nonwoven material (109) around the assembly, with overlap of one turn over another;
- placing a ribbon of connection cables, as one or more crossed plies, over this entire structure;
- winding a second layer in a spiral around this ribbon of cables, with no overlap;
- connecting the electroacoustic modules (105) to the cables of the connection ribbon;
- winding a third layer of nonwoven material around the second layer, with overlap;
- braiding a number of yarns on this third layer in order to form a net (111), and holding this net in place on the third layer by spots of adhesive;
- slipping very strong radial reinforcement rings (112) over this net, and holding these rings in place by adhesively bonding them to the net;
- winding a fourth layer of porous nonwoven material around this assembly, with overlap;
- braiding a net formed by wide-meshed strands;
- extruding a protective sheath reinforced with longitudinal yarns over this fourth layer;
- producing and connecting the ends of the section; and
- impregnating the foam forming the interior of the section with a dielectric oil under a slight overpressure.

2. Process according to Claim 1, charaterized in that the second layer in a spiral is made of porous nonwoven material.

3. Process according to Claim 1, **characterized in that** the second layer in a spiral is made with a polyester film.

4. Process according to any one of Claims 1 to 3, **characterized in that** the foam cylinder (101) is made from a foam tube (201) into which foam cylinders (206) matched to the internal diameter of this tube are inserted.

5. Process according to any one of Claims 1 to 4, **characterized in that** a continuous helical tape is used instead of the radial reinforcement rings (112), this tape being wound around or extruded over the foam cylinders (101).
